Europäisches Patentamt

European Patent Office

Office européen des brevets

(19)

(11) Publication number: **0 079 247**
**B1**

# EUROPEAN PATENT SPECIFICATION

(12)

(45) Date of publication of patent specification: **09.10.85**

(21) Application number: **82305990.2**

(22) Date of filing: **10.11.82**

(51) Int. Cl.⁴: **F 24 J 3/00,** F 28 F 7/02,
F 24 H 7/04

(54) Storage heaters.

(30) Priority: **11.11.81 GB 8134037**

(43) Date of publication of application:
**18.05.83 Bulletin 83/20**

(45) Publication of the grant of the patent:
**09.10.85 Bulletin 85/41**

(84) Designated Contracting States:
**DE FR NL SE**

(56) References cited:
FR-A- 740 670
FR-A-2 491 609
FR-E- 80 752
GB-A-1 279 404
US-A-1 378 130
US-A-1 721 938

(73) Proprietor: **THE ENGLISH ELECTRIC COMPANY
LIMITED
1, Stanhope Gate
London W1A 1EH (GB)**

(72) Inventor: **Williams, Geoffrey John
4 Gimson Avenue
Cosby Leicestershire, LE9 5SS (GB)**
Inventor: **Rodwell, Christopher
33 Park Lane Sutton Bonnington
Loughborough Leicestershire (GB)**

(74) Representative: **Keppler, William Patrick
Central Patent Department Wembley Office The
General Electric Company, p.l.c. Hirst Research
Centre East Lane
Wembley Middlesex HA9 7PP (GB)**

## Description

This invention relates to a storage heater using brick stacks.

Storage brick materials have a relatively low thermal conductivity and thus there is a well-known problem of first getting heat into the bricks from heating elements and then getting it out to the cooling medium, which is usually air.

US—A—1,721,938 discloses a thermal recuperator comprising a confined stack of vertical I-shaped bricks. Apertures extend through the central vertical limbs of the I's and register to form a first set of vertical air flues. These vertical flues are interspersed with but isolated from a second set of horizontal flues (defined by pairs of horizontally adjacent I's) through which hot gas is passed. The opposite horizontal limbs of each I mate with vertically adjacent bricks at their outer surfaces, and the two opposite mouths of the aperture extending up through each I are in the form of a shallow recess and a similar projection respectively. The projections and recesses of vertically adjacent bricks interlock but the horizontal surfaces of the cooperating projections and recesses do not abut one another.

US—A—1,378,130 discloses a similar confined stack of I-shaped bricks in a heat recuperator. However each projection (which is of relatively large cross-section in comparison with horizontal limbs of the I) protrudes to a greater extent than the depth of the recesses. Consequently a third set of passages is formed between the separated horizontal limbs of the I's, but no air, gas or other heat-exchange fluid is circulated through these passages.

According to the present invention a storage heater comprises an essentially free-standing stack of loosely interlocking heat-storage bricks, heating means arranged to heat said bricks and fan means arranged to circulate air through and thereby extract heat from said stack, wherein said bricks are individually provided with projections on one horizontal face and at least one recess on an opposite face, characterised in that there are two or more projections provided, said projections and recesses being so shaped and positioned that projections and recesses of vertically adjacent bricks mutually engage only at relatively small horizontal abutment surfaces thereof and thereby separate adjacent bricks at their major confronting surfaces.

Preferably said mutually engaging projections and recesses separate all the confronting faces of adjacent bricks.

Preferably the projections and recesses are frusto-conical, each frusto-conical projection being an easy fit inside a frusto-conical recess. The angles of the sides of the frusto-conical projections and recesses are preferably the same.

Preferably the projection configuration is located on a first face of each brick and the recess configuration is located on an opposite face of the brick.

Preferably each brick is provided with a group of projections arranged to cooperate with a common recess of an adjacent brick.

The storage heater may include means for drawing heated air from a space above the bricks through an air/liquid heat exchanger so providing a heat source for the liquid, which may be central heating water.

A storage heater brick, and a storage heater in accordance with the invention will now be described, by way of example, with reference to the accompanying drawings of which:

Figure 1 shows a pictorial view of a brick;

Figure 2 shows a cross-sectional vertical view of the brick along line A of Figure 1;

Figure 3 shows a cross-sectional view of an alternative form of brick; and

Figure 4 shows a schematic diagram of a storage heater.

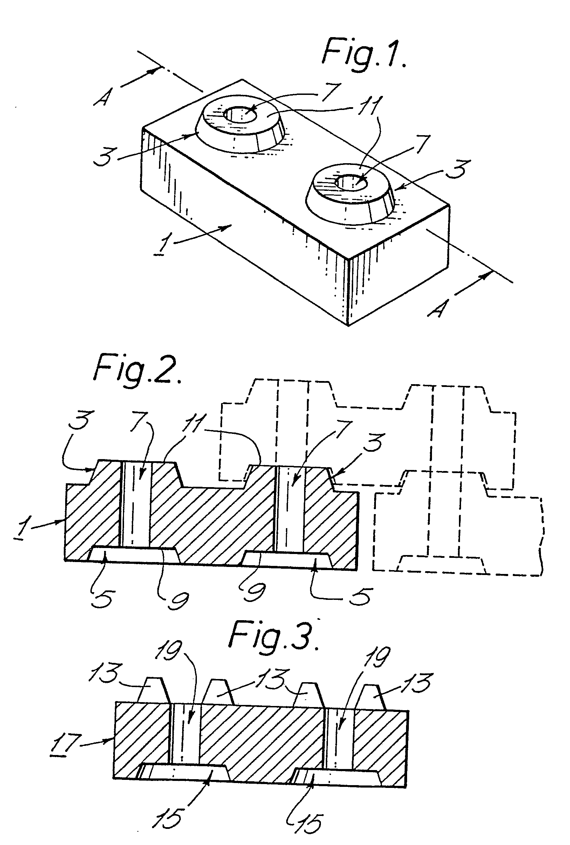

As shown in Figures 1 and 2 a brick 1 is illustrated having on one face two frusto-conical projections 3 and on the opposing face a recess configuration comprising corresponding recesses 5. The height of the projections is greater than the depth of the recesses and the recess diameter is such as to locate a projection without close engagement, i.e., as an easy or clearance fit between the conical walls. The bottom of each recess, face 9, and the top of each projection, face 11, provide abutment surfaces the size and position of which are such that a substantial part thereof is close to the edges of the bricks. A wide base of support is thus provided, allowing bricks to be piled stably one above the other, in a conventional wall formation, such that there is a clearance between the confronting faces of adjacent bricks. When stacked, face 9 of the recess rests on face 11 of a projection of another brick, and, as mentioned above, there is a clearance between the sides of the projection and the sides of the recess. The position of the projections 3 and recesses 5 on each brick is such that when the bricks are stacked in a wall formation there is a gap between two adjacent bricks on the same layer.

The bricks have through holes 7 between the recess 5 and the opposite projection 3 to increase the convection paths and provide ducts for housing electric elements.

Figure 3 shows an alternative projection configuration to that of Figure 1. This configuration has a group of four projections 13 to each recess 15. The projections 13 and recesses 15, are shaped and disposed on each brick in a form such that a traditional "nine-inch" wall formation can be bonded with headers and stretchers. Depending upon the shape of recess 15 the projections 13 may be square or round or of other shape suitable for locating a brick and providing a stable base for subsequent layers of bricks.

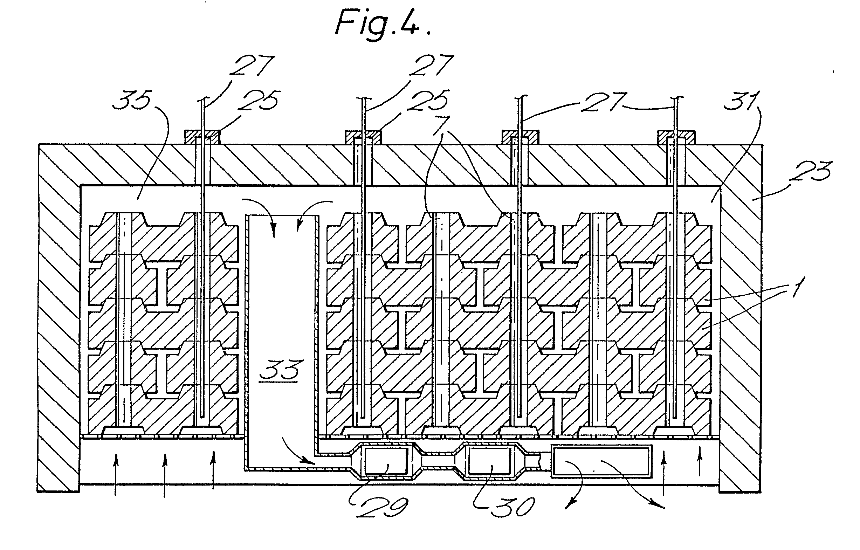

Figure 4 shows a storage heater 21 which incorporates the aforementioned bricks 1 of the kind shown in Figures 1 and 2. The bricks are stacked in a chamber 31 bounded by insulation 23 on the sides and top. The bricks are stacked in staggered formation so that their holes 7 are vertically aligned below access holes 25 in the insulation, the holes 25 passing from the chamber 31 through the insulation 23 to allow an electric heating element 27 to be located in selected ones of the holes 7. A vertical metal duct 33 is located inside the brickwork assembly, opening at the upper end into a space 35 above the brick core. An air/liquid heat exchanger 29 and a fan 30 are connected to the lower end of the duct 33 so that in the process of extracting heat from the heater warm air is drawn from the space 35 over the heat exchanger 29 by the fan 30. The heat thus taken from the air is used for purposes such as heating central heating water.

When the electric elements are energised, air flows up through the holes 7 by natural convection and also between the bricks so assisting the distribution of heat to them which heat must otherwise pass from the elements to the bricks largely by radiation and then through the bricks by conduction.

During heating the fan 30 is off and the bricks are heated by natural convection. During cooling the fan 30 is on, extracting air from the duct 33, the space 35 and thus drawing air upward through the holes 7 and between the bricks. Air is drawn into the heater through a grid on which the brick core stands, and is vented from a grille fed by the fan 30. The heat exchanger provides an optional heat sink for the heated air, it being controllable by control of the water flow.

The brick core may consist of layers of, say, twelve bricks in each layer arranged in different patterns from layer to layer so as to provide a secure, interlocking, core assembly. The duct 33 is conveniently square and of side equal to the width of one brick so that a pattern can be completed in each layer.

The interlocking construction of the bricks 1 provides a mutual bond and when stack in free standing blocks as in chamber 31 to a large extent the supporting metalwork currently used in storage heaters is obviated. The free standing brick cores are able to expand and contract without developing internal stresses, brick to brick, and they are not constrained in this storage heater 21 by supporting means having different expansion coefficients.

The bricks may be formed from any convenient storage brick material. The difficulty of holding to close dimensional tolerances articles manufactured by firing processes in the industrial ceramics industry is well known. The brick of the invention need be accurate only over the interlocking areas and thus the problem of dimensional accuracy is much reduced.

When fired at high temperature storage brick materials commonly form small blisters and glassy excrescences on the surface which normally have to be removed by individual hand labour before delivery. The type of brick illustrated virtually eliminates this work as the probability of a blister forming on the small amount of interlocking surface is low.

## Claims

1. A storage heater comprising an essentially free-standing stack of loosely interlocking heat-storage bricks (1), heating means (27) arranged to heat said bricks and fan means (30) arranged to circulate air through and thereby extract heat from said stack, wherein said bricks are individually provided with projections (3, 13) on one horizontal face and at least one recess (5, 15) on an opposite face, characterised in that there are two or more projections provided, said projections (3, 13) and recesses (5, 15) being so shaped and positioned that projections and recesses of vertically adjacent bricks mutually engage only at relatively small horizontal abutment surfaces thereof and thereby separate adjacent bricks at their major confronting surfaces.

2. A storage heater as claimed in Claim 1, wherein said mutually engaging projections (3, 13) and recesses (5, 15) separate all the confronting surfaces of adjacent bricks.

3. A storage heater as claimed in Claim 1 or Claim 2 wherein each brick (1) is provided with two or more said recesses (5, 15).

4. A storage heater as claimed in Claim 3 wherein said projections (3, 13) and recesses (5, 15) are frusto-conical, each frusto-conical projection being an easy fit inside a frusto-conical recess.

5. A storage heater as claimed in any of Claims 1 to 3, wherein said bricks (1) are individually provided with a group of projections (13) arranged to co-operate with a common recess (15) of an adjacent brick.

6. A storage heater according to Claim 5 wherein said recess (15) is square and said group consists of four individual projections (13) each one being located to fit at a corner of said recess (15).

7. A storage heater according to Claim 6 wherein said bricks (1) are provided with eight projections (13) and are stacked in a header and stretcher configuration.

8. A storage heater according to any preceding Claim wherein said bricks (1) are provided with aligned vertical through-holes (7) extending between said abutment surfaces (9) and electric heating elements (27) are loosely mounted in said through-holes.

9. A storage heater as claimed in Claim 8, including means (30, 33) for drawing heated air from a space (35) above the bricks through an air/liquid heat exchanger (29) so providing a heat source for said liquid.

10. A storage heater as claimed in any preceding claim wherein said fan means (30) is an extractor fan.

11. A storage heater as claimed in any preceding claim wherein said fan means (30) exhausts into a space beneath said stack of bricks.

12. A storage heater as claimed in Claim 11 said fan means (30), and said heat exchanger (29) are both situated within said space.

**Patentansprüche**

1. Heizspeichergerät mit einem im wesentlichen freistehenden Stapel von locker ineinandergreifenden Heizspeichersteinen (1), einer Heizvorrichtung (27), die zum Erwärmen dieser Steine angeordnet ist, und einer Lüftungsvorrichtung (30), die eine Luftzirkulation durch den Stapel bewirkt, wobei sie aus diesem Wärme herauszieht und wobei die Steine individuell Vorsprünge (3, 13) auf einer horizontalen Oberfläche und zumindest eine Aussparung (5, 15) auf einer gegenüberliegenden Oberfläche aufweisen, dadurch gekennzeichnet, daß zwei oder mehr Vorsprünge vorgesehen sind, wobei die Vorsprünge (3, 13) und Aussparungen (5, 15) derart geformt und angeordnet sind, daß Vorsprünge und Aussparungen von vertikal aneinandergrenzenden Steinen nur mit relativ kleinen horizontalen Auflageflächen dieser Steine ineinandergreifen und dabei aneinandergrenzende Steine an deren größeren sich gegenüberliegenden Oberflächenbereichen voneinander trennen.

2. Heizspeichergerät nach Anspruch 1, in dem ineinandergreifende Vorsprünge (3, 13) und Aussparungen (5, 15) die sämtlichen sich gegenüberliegenden Flächen aneinandergrenzender Steine trennen.

3. Heizspeichergerät nach Anspruch 1 oder Anspruch 2, in dem jeder Stein (1) zwei oder mehr dieser Aussparungen (5, 15) aufweist.

4. Heizspeichergerät nach Anspruch 3, in dem die Vorsprünge (3, 13) und Aussparungen (5, 15) in Form eines Kegelstumpfes ausgebildet sind, wobei jeder kegelstumpfförmige Vorsprung leicht in eine kegelstumpfförmige Aussparung einpaßbar ist.

5. Heizspeichergerät nach einem der Ansprüche 1 bis 3, in dem die Steine (1) individuell eine Gruppe von Vorsprüngen (13) aufweisen, die so angeordnet sind, daß sie mit einer gemeinsamen Aussparung (15) eines angrenzenden Steins zusammenwirken.

6. Heizspeichergerät nach Anspruch 5, in dem diese Aussparung (15) viereckig ist und in dem diese Gruppe aus vier einzelnen Vorsprüngen (13) besteht, die so angeordnet sind, daß sie jeweils an einer Ecke der Aussparung (15) in diese einpassen.

7. Heizspeichergerät nach Anspruch 6, in dem die Steine (1) acht Vorsprünge (13) aufweisen und in einer Anordnung aus Binder- und Läuferstein gestapelt sind.

8. Heizspeichergerät nach einem der vorhergehenden Ansprüche, in dem die Steine (1) ausgerichtete vertikale Durchgangslöcher (7) aufweisen, die sich zwischen den Auflageflächen (9) erstrecken, wobei elektrische Heizelemente (27) locker in den Durchgangslöchern befestigt sind.

9. Heizspeichergerät nach Anspruch 8, das Vorrichtungen (30, 33) aufweist, die erwärmte Luft aus einem Raum (35) oberhalb der Steine durch einen Luft-Flüssigkeitswärmeaustauscher (29) ziehen, so daß eine Heizquelle für die Flüssigkeit vorgesehen ist.

10. Heizspeichergerät nach einem der vorhergehenden Ansprüche, in dem die Lüftungsvorrichtung (30) eine Absauglüftung ist.

11. Heizspeichergerät nach einem der vorhergehenden Ansprüche, in dem die Lüftungsvorrichtung (30) in einen Raum unterhalb des Stapels von Steinen hinein evakuiert.

12. Heizspeichergerät nach Anspruch 11, dadurch gekennzeichnet, daß die Lüftungsvorrichtung (30) und der Wärmeaustauscher (29) beide innerhalb dieses Raums angeordnet sind.

**Revendications**

1. Dispositif de chauffage à accumulation comprenant un empilement essentiellement cohérent de briques d'accumulation de chaleur emboîtées avec du jeu (1), un dispositif de chauffage (27) destiné à chauffer les briques et un dispositif à ventilateur (30) destiné à fiare circuler de l'air dans la pile et à en extraire de la chaleur, les briques étant munies individuellement de saillies (3, 13) sur une face horizontale et d'au moins une cavité (5, 15) sur une face opposée, caractérisé en ce que deux saillies au moins sont disposées, les saillies (3, 13) et les cavités (5, 15) ayant une configuration et une position telles que les saillies et les cavités des briques adjacentes verticalement ne coopèrent que par des surfaces horizontales de butée relativement petites et séparent ainsi les briques adjacentes au niveau de leurs grandes faces en regard.

2. Dispositif de chauffage à accumulation selon la revendication 1, dans lequel les saillies (3, 13) et les cavités (5, 15) qui coopèrent séparent toutes les surfaces en regard des briques adjacentes.

3. Dispositif de chauffage à accumulation selon l'une des revendications 1 et 2, dans lequel chaque brique (1) a au moins deux cavités (5, 15).

4. Dispositif de chauffage à accumulation selon la revendication 3, dans lequel les saillies (3, 13) et les cavités (5, 15) sont tronconiques, chaque saillie tronconique se logeant facilement dans une cavité tronconique.

5. Dispositif de chauffage à accumulation selon l'une quelconque des revendications 1 à 3, dans lequel les briques (1) ont individuellement un groupe de saillies (13) disposées afin qu'elles coopèrent avec une cavité commune (15) d'une brique adjacente.

6. Dispositif de chauffage à accumulation selon la revendication 5, dans lequel la cavité (15) est carrée et le groupe est formé de quatre saillies individuelles (13) chacune disposée afin qu'elle se loge à un coin de la cavité (15).

7. Dispositif de chauffage à accumulation selon la revendication 6, dans lequel les briques (1) ont huit saillies (13) et sont empilées avec une configuration à boutisses et panneresses.

8. Dispositif de chauffage à accumulation selon l'une quelconque des revendications précédentes, dans lequel lesdites briques (1) ont des trous verticaux alignés (7) qui débouchent, entre les surfaces de butée (9), et des éléments de chauffage électrique (27) sont montés avec du jeu dans les trous qui traversent.

9. Dispositif de chauffage à accumulation selon la revendication 8, comprenant un dispositif (30) d'aspiration d'air chauffé d'un espace (35) délimité au-dessus des briques par l'intermédiaire d'un échangeur de chaleur air-liquide (29), formant ainsi une source de chaleur pour le liquide.

10. Dispositif de chauffage à accumulation selon l'une quelconque des revendications précédentes, dans lequel le dispositif à ventilateur (30) est un ventilateur d'extraction.

11. Dispositif de chauffage à accumulation selon l'une quelconque des revendications précédentes, dans lequel le dispositif à ventilateur (30) refoule dans une espace qui se trouve au-dessous de l'empilement de briques.

12. Dispositif de chauffage à accumulation selon la revendication 11, le dispositif à ventilateur (30) et d'échangeur de chaleur (29) étant tous deux placés dans ledit espace.

Fig.1.

Fig.2.

Fig.3.

Fig.4.